# EUROPÄISCHE PATENTSCHRIFT

(11) **EP 1 793 693 B1**
(45) Veröffentlichungstag und Bekanntmachung des Hinweises auf die Patenterteilung: **20.08.2008**
(21) Anmeldenummer: 05797121.0
(22) Anmeldetag: 26.09.2005
(51) Int. Cl.: A41D 1/00, H01F 38/14

(54) **KLEIDUNGSSTÜCK MIT INDUKTIVEM KOPPLER, INDUKTIVE BEKLEIDUNGSSTÜCKSCHNITTSTELLE UND VERWENDUNG DER SCHNITTSTELLE FÜR KLEIDUNGSSTÜCKE**
ARTICLE OF CLOTHING COMPRISING AN INDUCTIVE COUPLER, INDUCTIVE INTERFACE FOR AN ARTICLE OF CLOTHING AND USE OF SAID INTERFACE FOR ARTICLES OF CLOTHING
VETEMENT COMPRENANT UN COUPLEUR INDUCTIF, INTERFACE INDUCTIVE DE VETEMENT ET UTILISATION DE CETTE INTERFACE POUR DES VETEMENTS

(30) Priorität: 30.09.2004 DE 102004047650
(43) Veröffentlichungstag der Anmeldung: 13.06.2007
(73) Patentinhaber: W.L.GORE & ASSOCIATES GMBH, 85640 Putzbrunn (DE)
(72) Erfinder: SEIBERT, Johann, 80636 München (DE)
(74) Vertreter: Klunker . Schmitt-Nilson . Hirsch
(86) Internationale Anmeldenummer: PCT/EP2005/010388
(87) Internationale Veröffentlichungsnummer: WO 2006/037507

(56) Entgegenhaltungen:
- WO-A-20/05055390
- DE-A1- 10 201 265
- DE-A1- 10 259 734
- DE-A1- 19 621 003
- ANONYMOUS: "Electromagnet" INTERNET ARTICLE, [Online] 15. Juli 2004 (2004-07-15), XP002357363 Gefunden im Internet: URL:http://web.archive.org/web/20040715163 950/http://en.wikipedia.org/wiki/Electroma gnet> [gefunden am 2005-12-05]

## Beschreibung

Die vorliegende Erfindung betrifft ein Bekleidungsstück (Kleidungsstück), eine induktive Bekleidungsstückschnittstelle und die Verwendung der Schnittstelle für Kleidungsstücke.

Elektronische Geräte zur persönlichen Verwendung sind miniaturisiert worden, um die Tragbarkeit zu ermöglichen und dadurch die Nützlichkeit und Funktionalität von Geräten wie etwa Laptops, Mobiltelefone, Rechner, handgehaltene Organiser, tragbare Radios oder CD-Abspielgeräte sowie andere ähnliche Geräten zu verbessern. Ausreichende Miniaturisierung hat das Integrieren von Elektronik in Alltagsgegenstände wie etwa Bekleidung ermöglicht.

Viele Bekleidungsstücke werden jetzt so hergestellt, daß sie Taschen für das Tragen von Geräten wie etwa Mobiltelefonen, CD-Abspielgeräten und tragbaren Audioabspielgeräten und anderen elektronischen Gerätschaften enthalten.

Aus dem Stand der Technik ist das Konzept eines "tragbaren Computers" wohlbekannt, wobei ein derartiger tragbarer Computer ein leistungsstarkes und dennoch sehr kleines und ergonomisch ausgelegtes Computersystem umfaßt, das über längere Zeiträume von dem Benutzer getragen werden kann und üblicherweise bei oder auf der Bekleidung gehalten wird. Es ist wünschenswert, die kleinen elektronischen Geräte und/oder den tragbaren Computer zusammen mit seinen Peripherievorrichtungen in Textilien und Kleidungsstücken zu integrieren, wodurch die Funktionalität und Tragbarkeit der Geräte dramatisch ansteigt. Der Freisprechbetrieb ist ein Ziel bei vielen dieser Bemühungen.

Für bestimmte fortgeschrittene Funktionen können persönliche elektronische Geräte und/oder tragbare Computer mit verschiedenen Sensoren ausgestattet werden, die bevorzugt oder intrinsisch am Körper des Benutzers getragen werden müssen, zum Beispiel zum Detektieren der Pulsfrequenz, der EKG-Wellenform, der Atmung, der Schrittgeschwindigkeit oder anderer Parameter des Benutzers.

Einerseits müssen in solchen Fällen die Ausgangssignale von solchen Sensoren von der Innenseite eines Kleidungsstücks zu Elektronikgeräten und/oder tragbaren Computern übertragen werden, die sich außerhalb des Kleidungsstücks befinden. Solche Sensoren sind in Verbindung mit bestimmten Arten von Berufsbekleidung von besonderer Wichtigkeit, z.B. Schutzbekleidung für Feuerwehrleute oder Schutzuniformen für Militärpersonal. Es sollte jedoch klar sein, daß die Verwendung von Sensoren nicht auf solche Arten der Schutzbekleidung begrenzt ist, da es weitere Anwendungsgebiete gibt, z.B. für Outdoor-Freizeit-Bekleidung usw.

Andererseits müssen intelligente Sensoren oder andere elektronische Geräte, die auf der Innenseite des Kleidungsstücks angeordnet sind, möglicherweise mit Steuerdaten oder dergleichen von einem auf der Außenseite des Kleidungsstücks befindlichen Computer versorgt werden.

Für fortgeschrittene Lösungen ist somit eine bidirektionale Datenübertragung zwischen irgendeiner Art von Vorrichtung, die sich auf der Außenseite des Kleidungsstücks befindet, und anderen Komponenten, die sich auf der Innenseite des Kleidungsstücks befinden, wünschenswert.

In vielen Fällen benötigen die auf der Innenseite des Kleidungsstücks befindlichen elektronischen Komponenten möglicherweise eine gewisse Form von elektrischer Stromversorgung. Dies kann durch Bereitstellung einer separaten Batterie oder eines Akkumulators in der Nähe von oder bei den jeweiligen elektronischen Komponenten erfolgen; es wäre jedoch eindeutig vorteilhaft, eine elektrische Stromversorgung durch die gleichen Mittel bereitzustellen, die für die Datenübertragung vorgesehen sind, um die Komplexität und die Kosten des Systems zu reduzieren.

Ein weiterer wichtiger Aspekt moderner Kleidungsstücke betrifft die technischen Eigenschaften hinsichtlich Durchlässigkeit für flüssiges Wasser und Wasserdampf. Insbesondere für Outdoor-Anwendungen sollten Kleidungsstücke wasserdicht sein. Bei weiter entwickelten Anwendungen jedoch sollte Wasserdampf hindurchtreten können, damit der Tragekomfort derartiger Textilien verbessert wird, indem die Befeuchtung der Haut eines Benutzers mit Schweiß vermieden oder zumindest reduziert wird. Es sind verschiedene verbesserte Textilmaterialien bekannt, die eine gewisse Art von Membran umfassen (z.B. aus einem mikroporösen Polytetrafluorethylen PTFE hergestellt), die für Wasserdampf durchlässig ist, aber für Wasser in der flüssigen Form undurchlässig ist.

Wenn der Weg für die Zufuhr von elektrischem Strom und/oder Datensignalen von mindestens einer auf der Außenseite eines Kleidungsstücks befestigten Elektronikeinrichtung zu einem Sensor oder einer anderen elektronischen Komponente, die auf der Innenseite des Kleidungsstücks befestigt ist, festgelegt wird, wird eine Lösung für das Problem der Weiterleitung von Daten und/oder Elektrizität durch das Textil des Kleidungsstücks benötigt. Wenn ein wasserfestes Kleidungsstück verwendet werden soll, müssen Vorkehrungen getroffen werden, um sicherzustellen, daß etwaige elektronische Einrichtungen für die Daten- und/oder elektrische Stromübertragung sich nicht schädlich auf die wasserfesten Eigenschaften des Kleidungsstücks auswirken.

Aus der Patentschrift US 6,324,053 B1 sind ein System und ein Verfahren für den elektrischen Zusammenschluß von in einem tragbaren Computer oder in einem ähnlichen System enthaltenen Vorrichtungen bekannt geworden. Ein Stromversorgungs- und Datennetz wird ausgebildet, indem an Bekleidung, in Form von Stichen, ein extrem feiner leitender Draht befestigt wird, mit dem in einem tragbaren Computer enthaltene Vorrichtungen verbunden werden, wobei eine E/A-Einrichtung und ein Computersystemhauptkörper getrennt angeordnet sind.

Das Netz, wie es aus der Patentschrift US 6,324,053 B1 bekannt ist, ist an sich zum Verbinden von Sensoren oder anderen elektronischen Komponenten, die auf der Innenseite eines bestimmten Kleidungsstücks befestigt sind, mit einem tragbaren Computer oder mit anderen elektronischen Geräten geeignet, die auf der Außenseite eines elektronischen Kleidungsstücks befestigt sind. Einen feinen leitenden Draht in Form von Stichen einzuführen bedeutet jedoch, daß dieser Versuch insbesondere mit der Bereitstellung einer wasserdichten, aber dampfdurchlässigen Bekleidung unvereinbar ist, die mit einer Membran ausgestattet ist. Eine derartige Membran würde unvermeidlicherweise durch die zum Herstellen des Netzes erforderlichen Stiche mehrmals durchstochen werden, was unerwünschte Wasserbrücken erzeugt. In der praktischen Erfahrung hat sich gezeigt, daß es sehr schwierig ist, solche Wasserbrücken entlang der Stiche zu schließen. Außerdem liefern die feinen Drähte eine galvanische Kopplung, die elektrische Probleme wie eine elektrische Gefahrenquelle oder schlechte elektrische Eigenschaften verursachen könnte.

Aus der Patentanmeldung WO 01/45038 A2 ist ein Kommunikationssystem mit kurzer Reichweite bekannt geworden. Bei einer besonderen Implementierung des Systems fragt ein in der Nähe einer Person gehaltener Abfragesender mehrere Transponder ab und empfängt Informationen getrennt von den Transpondern. Der Abfragesender und/oder die Transponder können in einem Kleidungsstück oder einem Gepäckstück der Person gehalten werden. Durch solch ein System können die von einer Person getragenen Kleidungsstücke mit mehreren Gegenständen kommunizieren, um z.B. Nutzinformationen zu erhalten. Prinzipiell kann ein aus der Patentanmeldung WO 01/45038 A2 bekanntes Kommunikationssystem mit kurzer Reichweite auch zum Übertragen von Sensordaten von einem auf der Innenseite des Kleidungsstücks befestigten Sensor durch dessen (textiles) Material zu einem beliebigen elektronischem Gerät oder einem tragbaren Computer, das/der auf der Außenseite des Kleidungsstücks befestigt ist, verwendet werden, ohne daß das Kleidungsstück durchstochen wird.

In einer Reihe von Fällen muß jedoch der Benutzer von tragbaren Computern oder anderen vergleichbaren elektronischen Geräten für den persönlichen Gebrauch davor geschützt werden, daß er durch abgehende gefährdende elektromagnetische Ausstrahlungen abgehört wird, und auch vor Störungen geschützt werden, die durch elektromagnetische Interferenz (EMI) von ankommender elektromagnetischer Strahlung der Umgebung verursacht werden, insbesondere solche, die durch starke elektromagnetische Impulse (EMP) verursacht werden.

Bezüglich militärischer Anwendungen ist dies besonders relevant; bis zu einem gewissen Grad müssen diese Anforderungen auch z.B. bezüglich Profis wie Feuerwehrleute usw. erfüllt werden.

Zudem eignet sich eine Lösung rein auf Funkbasis nicht dafür, auf der Innenseite des Kleidungsstücks angeordnete elektronische Komponenten mit einer erheblichen Menge elektrischer Leistung zu versorgen, die auf der Außenseite des Kleidungsstücks bereitgestellt wird. Außerdem bestehen Bedenken hinsichtlich der biologischen Gefahren, die möglicherweise dadurch verursacht werden könnten, daß lebendes Gewebe relativ starken Feldern mit hochfrequenter elektromagnetischer Strahlung ausgesetzt wird, was für eine effektive Übertragung elektrischer Leistung über ein hochfrequentes elektromagnetisches Feld erforderlich wäre.

Wenngleich eine drahtlose Verbindbarkeit geeignete Vorteile bereitstellen kann, gibt es somit Anwendungsgebiete, bei denen die Zusammenschaltung von Elektronikgeräten für den persönlichen Gebrauch und/oder eines tragbaren Computers mit ihrer Peripherie mit Hilfe von (bevorzugt abgeschirmten) elektrischen Stromleitungen gegenüber drahtlosen Lösungen bevorzugt werden würden.

Die Bereitstellung eines Verbindungsdrahtes, der das das Kleidungsstück bildende Textilmaterial durchsetzt, ist jedoch in allen Fällen, wo Eigenschaften hinsichtlich der Wasserdichtigkeit kritisch sind, sehr problematisch.

Es besteht somit ein starker Bedarf daran, ein fortschrittliches Kleidungsstück bereitzustellen, das mit Möglichkeiten ausgestattet ist, um elektronische Geräte miteinander und/oder einen tragbaren Computer mit seiner entsprechenden Peripherie zu verbinden, wobei durch das Textilmaterial gehende elektrische Stromversorgungs- und/oder Datenwege bereitgestellt werden müssen, ohne daß das das Kleidungsstück bildende Material durchstochen wird oder wo zumindest die Ränder des das Kleidungsstück bildenden Materials auf zuverlässige Weise wasserdicht gemacht werden können.

Eine Aufgabe der vorliegenden Erfindung besteht deshalb in der Verbesserung eines derartigen Kleidungsstücks, derart, dass es die die Zufuhr von elektrischem Strom und/oder den Durchtritt von Datenströmen durch das das Kleidungsstück bildende Textilmaterial gestattet.

Eine Aufgabe der vorliegenden Erfindung besteht in der Verbesserung einer induktiven Schnittstelle, welche die Zufuhr von elektrischem Strom und/oder den Durchtritt von Datenströmen durch das das Kleidungsstück bildende textil oder Gewebe gestattet.

Diese Aufgaben der Erfindung werden durch die Bereitstellung einer induktiven Bekleidungssschnittstelle gemäß Anspruch 1 sowie durch Bereitstellung eines Bekleidungsstücks gemäß Anspruch 10. Weitere Verbesserungen kann man den abhängigen Ansprüchen entnehmen.

Ein Bekleidungsstück wird bereitgestellt, wobei das Bekleidungsstück mindestens eine Schicht aus einem flexiblen Material sowie eine induktive Koppeleinrichtung zum Schicken von elektrischem Strom und/oder Datensignalen durch die mindestens eine Schicht des flexiblen Materials umfaßt. Das flexible Material braucht kein Textil zu sein (es könnte z.B. eine Folie oder ein Film sein, aus Kunststoff hergestellt); in vielen Anwendungen wird ein Textil als Material für das Bekleidungsstück bevorzugt.

Eine induktive Bekleidungsstückschnittstelle, die in der Lage ist, elektrischen Strom und/oder Daten zwischen einer Innenseite und einer Außenseite eines Bekleidungsstücks, mit dem die Schnittstelle verwendet werden soll, zu übertragen, ist ebenfalls vorgesehen, wobei das Bekleidungsstück eine Materialschicht und die Schnittstelle eine induktive Koppeleinrichtung umfaßt, wobei ist ebenfalls vorgesehen, wobei das Bekleidungsstück eine Materialschicht und die Schnittstelle eine induktive Koppeleinrichtung umfaßt, wobei die induktive Koppeleinrichtung folgendes aufweist: eine erste Koppeleinheit, die dafür ausgelegt ist, an der Materialschicht befestigt zu werden und einen ersten Koppelabschnitt umfaßt, der dafür ausgelegt ist, von einer Außenseite der Materialschicht aus zugänglich zu sein, wobei der erste Koppelabschnitt mit einer ersten Spule versehen ist, die im isolierenden Material des ersten Koppelabschnitts eingebettet ist und dafür ausgelegt ist, operativ mit einem auf der Innenseite der Bekleidung angeordneten internen elektrischen System verbunden zu werden; eine zweite Koppeleinheit, die einen zweiten Koppelabschnitt umfaßt, der dafür ausgelegt ist, lösbar mit dem ersten Koppelabschnitt zusammengefügt zu werden, wobei der zweite Koppelabschnitt mit einer zweiten Spule versehen ist, die in isolierendem Material des zweiten Koppelabschnitts eingebettet und dafür ausgelegt ist, mit einem auf der Außenseite der Bekleidung angeordneten externen elektrischen System operativ verbunden zu werden; wobei die erste und zweite Koppeleinheit so ausgelegt sind, daß die erste und zweite Spule in der Lage sind, die induktive Übertragung von elektrischem Strom und/oder Daten durchzuführen, wenn der erste und zweite Koppelabschnitt zusammengefügt sind. Mindestens eine der ersten und zweiten Koppeleinheit enthält eine Elektronikschaltung, die dafür ausgelegt ist, durch die Koppeleinrichtung zu koppelnde Datensignale gemäß mindestens einem vordefinierten Datenübertragungsprotokoll zu konvertieren.

Mit Hilfe einer induktiven Kopplung können Energie und/oder Daten durch einen Transformator kontaktlos übertragen werden, wobei eine erste Spule davon auf der Außenseite eines Kleidungsstücks und eine zweite Spule davon auf der Innenseite davon angeordnet ist.

Die vorliegende Erfindung kann in Verbindung mit Kleidungsstücken verwendet werden, die mit einer Funktionsschicht ausgestattet sind. Eine Funktionsschicht ist eine Schicht, die Teil des Materials bildet, das das Kleidungsstück darstellt, und die dem Kleidungsstück mindestens eine relevante Eigenschaft verleiht. Insbesondere kann eine Funktionsschicht eine wasserdichte Schicht sein, die das Kleidungsstück für flüssiges Wasser undurchlässig macht. Eine vorteilhaftere Funktionsschicht kann eine semipermeable Schicht sein, das heißt eine Membranschicht, die für Wasserdampf durchlässig ist, aber für flüssiges Wasser undurchlässig ist. Solche semipermeablen Funktionsschichten können aus gerecktem Polytetrafluorethylen (ePTFE) hergestellt sein.

Verschiedene Aspekte der Erfindung und von verschiedenen Ausführungsformen davon werden nun unter Verwendung der beiliegenden Zeichnung ausführlicher erläutert:
- Fig. 1: zeigt ein Kleidungsstück mit einem induktiven Koppler gemäß der vorliegenden Erfindung.
- Fig. 2: zeigt ein schematisches elektrisches Schaltungsdiagramm, das die ordnungsgemäße Implementierung einer Schaltung zur Verwendung in Verbindung mit dem einen induktiven Koppler gemäß der vorliegenden Erfindung umfassenden Kleidungsstück darstellt.
- Fig. 3: zeigt einen Querschnitt durch eine erste Ausführungsform eines Kleidungsstücks mit einem induktiven Koppler gemäß der vorliegenden Erfindung.
- Fig. 4: zeigt einen Querschnitt durch eine zweite Ausführungsform eines Kleidungsstücks mit einem induktiven Koppler gemäß der vorliegenden Erfindung.
- Fig. 5: zeigt die Abwandlung des induktiven Kopplers, wie er in Fig. 4 dargestellt ist. Insbesondere zeigt Fig. 5a einen Querschnitt durch einen derartigen Koppler, wohingegen Fig. 5b eine entsprechende Perspektivansicht davon zeigt.
- Fig. 6: zeigt einen Querschnitt durch ein zweites Kopplerelement, das auf ein Laminat geklebt ist, das ein ein Kleidungsstück gemäß der Erfindung bildendes flexibles Material umfaßt.

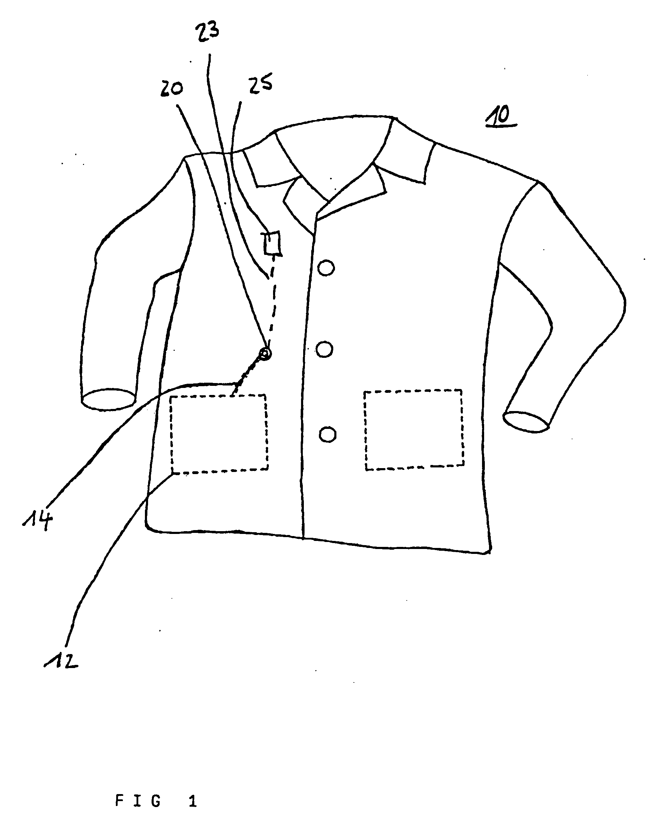

In Fig. 1 ist eine Jacke 10 mit einem induktiven Koppler 20 gemäß der Erfindung ausgestattet. In einer an der Außenseite der Jacke 10 befestigten Tasche 12 hebt ein nicht gezeigter Benutzer ein nicht gezeigtes Elektronikgerät auf, das über einen Draht 14 mit dem induktiven Koppler 20 verbunden ist. Das in der Tasche 12 aufgehobene Elektronikgerät könnte z.B. ein Computer, eine telemetrische Sendeempfangseinheit oder ein digitales Daten- und/oder Sprachaufzeichnungsgerät sein. Auf der Innenseite der Jacke 10 ist der induktive Koppler 20 über einen zweiten Draht 23 mit einem am Körper des nicht gezeigten Benutzers angebrachten Sensor 25 verbunden. Der Sensor 25 kann z.B. ein Körpertemperatursensor, ein Impulssensor oder ein Herzsignalsensor sein. Anstelle des Sensors 25 können bei einer bevorzugten Ausführungsform andere auf der Innenseite der Jacke zu verwendende elektronische Komponenten mit dem induktiven Koppler 20 verbunden sein. Beispielsweise könnte anstelle des Sensors 25 ein nicht gezeigtes Mikrofon verwendet werden. Bei einer noch weiter entwickelten Ausführungsform kann die Verdrahtung 23 durch ein digitales Bussystem implementiert werden, das eine Vielzahl von mit dem induktiven Koppler 20 zu verbindenden elektrischen Komponenten ermöglicht.

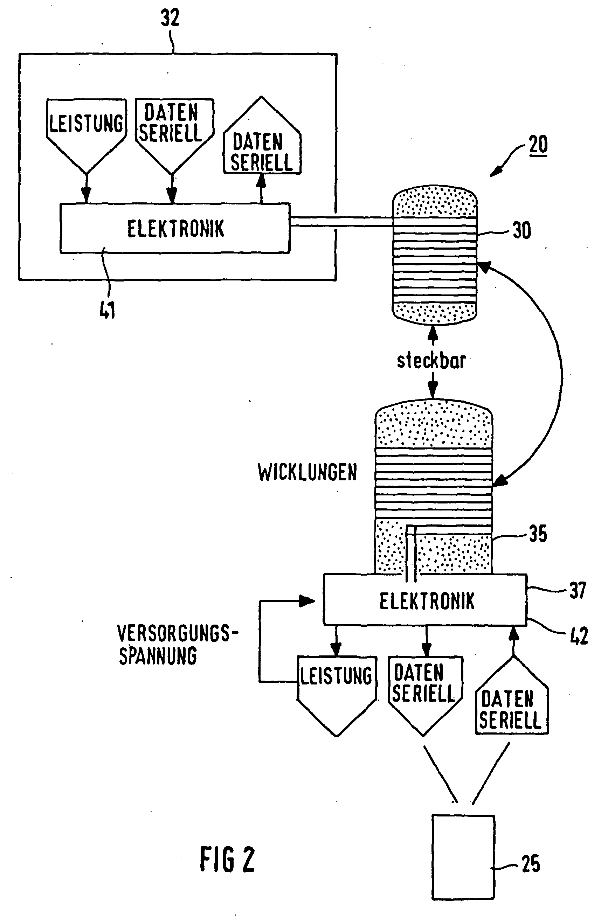

Im Hinblick auf Fig. 2 umfaßt der induktive Koppler 20 eine erste Spule 30, die mit einem Elektronikgerät 32 auf der Außenseite der Jacke 10 verbunden ist, und eine zweite Spule 35, die mit dem mindestens einen Sensor 25 auf der Innenseite der Jacke 10 verbunden ist.

Die Basisfunktion des induktiven Kopplers 20 ist zweifacher Art:
a) Zuerst wird die erste Spule 30 mit einem Wechselstrom (AC) geeigneter Spannung und Frequenz versorgt, damit sie etwa wie die Primärwicklung eines Transformators funktioniert, wohingegen die zweite Spule 35 Energie von dem sich ergebenden magnetischen Wechselfeld der ersten Spule 30 wie die Sekundärwicklung eines Transformators aufnimmt und eine entsprechende Ausgangsspannung liefert, die einem Kopplersteuerblock 37 zugeführt werden kann, wo sie gleichgerichtet und gefiltert wird, um als Versorgungsspannung für etwaige auf der Innenseite der Jacke 10 angebrachte elektrische Komponenten zu dienen. Frequenz-, Spannungs- und Stromwerte werden gemäß den üblichen Regeln für lose koppelnde Transformatoren festgelegt.
b) Zweitens werden die erste Spule 30, die zur Außenseite der Jacke 10 orientiert ist, und die zweite Spule 35, die zur Innenseite der Jacke 10 orientiert ist, als Kopplertransformator eingesetzt, um informationstragende Signale von der Elektronikeinrichtung 32 zum Sensor 25 und umgekehrt zu übertragen. Um eine Störung des der ersten Spule 30 zu Stromversorgungszwecken zugeführten Wechselstroms zu vermeiden, sollte die Frequenz des informationstragenden Wechselstroms bevorzugt von der Frequenz des Stromversorgungswechselstroms verschieden sein.

Bei einer Ausführungsform der vorliegenden Erfindung sind die erste und die zweite Spule aus mehreren Wicklungen aus Kupferdraht (Cu) hergestellt, z.B. kann die erste Spule 30 aus 45 Wicklungen eines Cu-Drahts mit 0,3 mm Durchmesser bestehen. Die zweite Spule 35 kann aus 60 Wicklungen eines Cu-Drahts mit einem Durchmesser von 0,224 mm bestehen. Bei einer Ausführungsform wird eine Versorgungsspannung von etwa 14 V in die erste Spule 30 eingespeist. Die bei der zweiten Spule 35 erhaltene Spannung beträgt etwa 3 V. Bei Maximallast beträgt der Strom in der ersten Spule 30 etwa 230 mA, wohingegen der entsprechende Strom in der zweiten Spule 35 etwa 80 mA beträgt.

Zum Übertragen von informationstragenden Signalen werden bei einer Ausführungsform Frequenzen im Bereich zwischen etwa 50 kHz und etwa 500 kHz verwendet. Bei anderen Ausführungsformen jedoch können Frequenzen mindestens in einem Bereich zwischen etwa 1 kHz und mehreren MHz verwendet werden.

Es wird angenommen, daß elektromagnetische Felder in solchen Frequenzbereichen physiologisch unschädlich sind. Angesichts der mechanischen und elektrischen Eigenschaften der Ausführungsformen dominiert tatsächlich die magnetische Komponente die elektrische Komponente. Es wird davon ausgegangen, daß schwache magnetische Wechselfelder mit relativ geringer Frequenz keine Gesundheitsgefahren verursachen.

Aus der Patentanmeldung DE 196 21 003 A1 ist ein als induktiver Übertrager ausgebildeter Steckverbinder mit einem induktiven Koppler zum Übertragen von elektrischer Energie sowie elektrischen informationstragenden Signalen bekannt geworden. Der Steckverbinder weist zwei zusammensteckbare Steckerteile auf, von denen jeder eine in Kunststoff eingebettete Wicklung aufweist, wobei die beiden Wicklungen im zusammengesteckten Zustand der beiden Steckerteile sich derart gegenüberliegen, dass sie einen Übertrager für die elektrische Energie beziehungsweise informationstragenden Signale bilden. Dieses Dokument beschreibt das grundlegende Prinzip eines steckbaren induktiven Kopplers.

Um durch die Kopplungseinrichtung gekoppelt zu werden, müssen informationstragende Datensignale gemäß mindestens eines vordefinierten Datenübertragungsprotokolls ausgebildet sein.

Bei einer grundlegenden Ausführungsform der Erfindung gestattet der mit dem Kleidungsstück verwendete induktive Koppler 20 nur eine Simplexinformationsübertragung; das heißt, Informationen können nur von dem elektronischen Gerät 32 auf eine auf der Innenseite der Jacke 10 befindliche bestimmte, nicht gezeigte, elektronische Komponente oder alternativ bei einer besonders bevorzugten Ausführungsform nur vom Sensor 25 auf der Innenseite der Jacke 10 zu der auf der Außenseite der Jacke 10 befindlichen elektronischen Vorrichtung übertragen werden.

Bei einer weiter entwickelten Ausführungsform der Erfindung jedoch ist es vorteilhaft, eine Duplexdatenübertragung in beiden Richtungen zu ermöglichen. Eine derartige Duplexdatenübertragung kann insbesondere gemäß zwei alternativen Prinzipien implementiert werden:
a) Bei einer Frequenzmultiplexlösung werden Signale, die bei irgendwelchen auf der Innenseite der Jacke 10 befindlichen elektronischen Komponenten eingehen, auf einer anderen Trägerfrequenz geführt als abgehende Signale, die von etwaigen Elektronikkomponenten auf der Innenseite der Jacke 10 kommen und sich zur elektronischen Vorrichtung 32 ausbreiten. Dieses Frequenzmultiplexverfahren ist insofern vorteilhaft, als es parallele Datenübertragungen zur gleichen Zeit ermöglicht; die Verarbeitung von zwei verschiedenen Trägerfrequenzen erfordert jedoch die Bereitstellung von zwei verschiedenen Modulations-/Demodulationsstufen, und zwar eine für jede Richtung (nicht gezeigt).
b) Alternativ kann ein Zeitmultiplexverfahren verwendet werden. In diesem Fall wird ein Halbduplexbetriebsverfahren festgelegt, indem der Signalweg durch den induktiven Koppler abwechselnd einer der beiden Datenübertragungsrichtungen gewidmet wird. Für diesen Fall muß eine bestimmte Art von gesteuertem Schalter bereitgestellt werden, der die Richtung des Flusses von informationstragenden Signalen zu jedem Zeitpunkt steuert.

Bezüglich der vorliegenden Erfindung können sowohl Frequenzmultiplex- als auch Zeitmultiplexsverfahren verwendet werden. In jedem Fall muß auf jeder Seite der durch den induktiven Koppler 20 bereitgestellten Kommunikationsstrecke eine geeignete Elektronikeinheit 41 bzw. 42 zu Modulations-, Demodulations- und Steuerzwecken bereitgestellt werden.

Das vordefinierte Datenübertragungsprotokoll kann bevorzugt so ausgelegt werden, daß es mit einem Protokoll einer Computerstandardschnittstelle kompatibel ist, wobei die Computerstandardschnittstelle z.B. ausgewählt ist aus einer Gruppe bestehend aus den Schnittstellen RS 232, universeller serieller Bus (USB) und Firewire.

Die Modulation kann durch eines der üblichen Modulationsverfahren erfolgen, z.B.
• Amplitudenmodulation,
• Abwandlung der Amplitudenmodulation wie etwa DSSC (double side band suppressed carrier), Quadraturamplitudenmodulation (QAM) und dergleichen,
• Frequenzmodulation,
• Phasenmodulation,
• Vektormodulation oder
• Digitale Modulation.

Außerdem können auch nachfolgend aufgeführte Verfahren verwendet werden.
• Pulsamplitudenmodulation,
• Pulsfrequenzmodulation,
• Pulsphasenmodulation,
• Pulsbreitenmodulation,
• Pulscodemodulation.

Außerdem können Umtastungsverfahren verwendet werden, beispielsweise Phasenumtastung (PSK) oder Amplitudenumtastung (ASK). Insbesondere können für digitale Signale Modulationsverfahren gemäß der folgenden Standards verwendet werden:
• QPSK, 8PSK, 16PSK (gleichzeitige Übertragung mehrerer Bit),
• QAM (16QAM, 32QAM, 64QAM usw.) (gleichzeitige Übertragung mehrerer Bit) oder
• DMT oder OMDF (gleichzeitige Übertragung auf einer Reihe von Trägerfrequenzen).

Bei einer bevorzugten Ausführungsform wird die Frequenzumtastung (57,6 kHz/115,2 kHz) zu Datenübertragungszwecken von der ersten Spule 30 zur zweiten Spule 35 verwendet. Für die umgekehrte Richtung wird Amplitudenmodulation auf einem Träger von 500 kHz verwendet. Andere Parameterwerte funktionieren jedoch ebenfalls.

Zur Verbesserung der Effizienz der induktiven Kopplung zwischen der ersten Spule 30 und der zweiten Spule 35 kann ein ferromagnetischer Kern enthalten sein.

Der induktive Koppler 20 erzeugt unvermeidlich in seiner Nähe ein magnetisches Streufeld. Dieses Streufeld könnte durch potentielle feindliche dritte Parteien ausgenutzt werden, um insbesondere:
a) den die Jacke 10 tragenden Benutzer über eine Entfernung hinweg durch Peilen der Richtung zu finden, aus der das magnetische Streufeld kommt, oder
b) den Informationsfluß abzuhören, der durch den induktiven Koppler 20 hindurchtritt, indem das magnetische Streufeld aus einer Entfernung aufgefangen wird.

Weiter fortgeschrittene Abwandlungen der Erfindung können somit ausgestattet werden mit
a) einer starken und effektiven TEMPEST-Abschirmung des induktiven Kopplers 20 und aller damit verbundener Verdrahtung und
b) Verschlüsselungs-/Entschlüsselungsmitteln, die den durch den induktiven Koppler 20 hindurchtretenden Informationsfluß verschlüsseln und dadurch alle aus dem magnetischen Streufeld aufgenommenen Informationen für eine abhörende dritte Partei wertlos machen.

Die TEMPEST-Abschirmung kann eine nicht gezeigte Verkapselung des induktiven Kopplers 20 durch metallische Materialien mit entsprechenden elektromagnetischen und magnetischen Absorptionseigenschaften umfassen. Bei weiter entwickelten Lösungen können außerdem aktive Abschirmungstechniken verwendet werden, die beispielsweise aus den Dokumenten US 5,165,098 und US 5,297,201 bekannt sind.

Durch solche und ähnliche Mittel können ein Kleidungsstück und/oder eine Schnittstelle gemäß der Erfindung bereitgestellt werden, die gegenüber elektromagnetischer Interferenz (EMI) widerstandsfähig sind.

Es ist auch möglich, ein derartiges Kleidungsstück und/oder eine derartige Schnittstelle bereitzustellen, die gegenüber Versuchen zum Abhören des Datenflusses durch das das Kleidungsstück bildende Textilmaterial beständig ist.

Der Datenfluß durch den induktiven Koppler 20 kann durch wohlbekannte symmetrische, asymmetrische oder hybride kryptographische Verfahren verschlüsselt werden. Ein besonderes Problem ist das Schlüsselmanagement; das heißt das auf der Innenseite der Jacke 10 angeordnete elektronische Gerät muß mit kryptographischem Schlüsselmaterial versorgt werden, das dem kryptographischen Schlüsselmaterial entspricht, das von dem außerhalb der Jacke 10 angeordneten elektronischen Gerät verwendet wird. Dies kann entweder manuell durch explizites Eingeben der richtigen kryptographischen Schlüssel in jede beteiligte elektronische Komponente oder durch Verwenden eines kryptographischen Schlüsselerzeugungs- und Verteilungsprotokolls erfolgen. Geeignete Protokolle sind z.B. RSA (asymmetrisch), Triple-DES (symmetrisch) oder Blowfish. Der Schlüsselaustausch kann mit dem COMSET-Verfahren erfolgen. Ein weiterer Punkt ist die richtige Authentisierung aller mit dem Signalweg des induktiven Kopplers verbundenen elektronischen Geräte. Zu Authentisierungszwecken können Protokolle wie Kerberos eingesetzt werden. Technische Einzelheiten für eine ordnungsgemäße Implementierung derartiger kryptographischer Protokolle sind z.B. erhältlich aus Schneier, Bruce: Applied Cryptography, New York: John Wiley 8 Sons, Inc., 2. Auflage, 1996.

Bei weiter entwickelten Varianten wird zudem der induktive Koppler 20 gegenüber Interferenz durch ankommende elektromagnetische Strahlung und/oder starke magnetische Wechselfelder, z.B. solche, die von nahegelegenen Rundfunksendern ausgestrahlt werden, starken magnetischen Wechselfeldern in der Nähe von Leistungstransformatoren und dergleichen, gehärtet. Für militärische Anwendungen kann der induktive Koppler 20 auch gegenüber elektromagnetischen Impulsen (EMP) gehärtet werden.

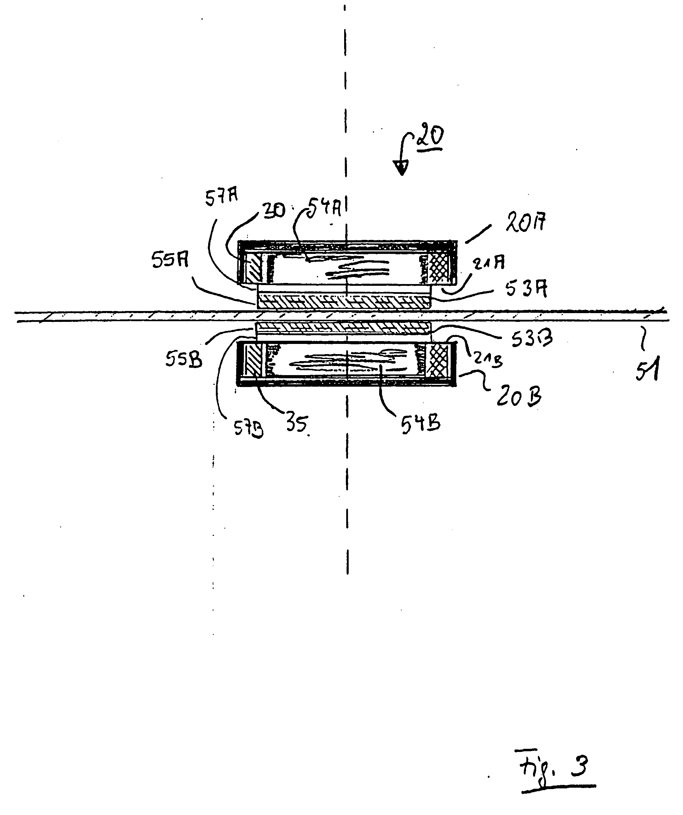

In Fig. 3 bezeichnet die Bezugszahl 51 eine flexible Materialschicht, z.B. ein Gewebe, aus der die Jacke 10 in Fig. 1 hergestellt ist. Eine erste Ausführungsform des induktiven Kopplers 20 umfaßt ein erstes Kopplerelement 20A zum Anbringen an der Außenseite der Jacke 10 sowie ein zweites Kopplerelement 20B zum Anbringen an der Innenseite der Jacke 10. Beide Kopplerelemente 20A, 20B werden etwa an der gleichen Stelle auf der Außenseite bzw. der Innenseite des Gewebes befestigt. Bevorzugt werden das erste Kopplerelement 20A und das zweite Kopplerelement 20B mit Hilfe eines Klettverschlusses 53A bzw. 53B ungefähr an derselben Stelle an dem Gewebe 51 befestigt. Auf jeder Seite des Gewebes 51 ist ein Streifen 55A, 55B permanent an der Oberfläche des Gewebes befestigt, das heißt mit Hilfe eines Klebers oder einer Naht (nicht gezeigt). Entsprechende GegenStreifen 57A, 57B, die dafür ausgelegt sind, an den entsprechenden Streifen 55A bzw. 55B angepaßt zu werden, werden (z.B. durch eine Klebeschicht) permanent an einer polaren Außenfläche 21A, 21B des ersten bzw. zweiten Kopplerelements 20A, 20B befestigt. Die Bezugszahlen 54A und 54B bezeichnen fakultative Ferritkerne innerhalb des ersten Kopplerelements 24A bzw. innerhalb des zweiten Kopplerelements 24B. Eines der beiden Kopplerelemente 24A, 24B oder beide von ihnen können mit einem ferromagnetischen Ferritkern ausgestattet sein, um die Koppeleffizienz zu verbessern.

Mit Hilfe des Klettverschlusses 53A, 53B können sowohl das erste als auch das zweite Kopplerelement 20A, 20B an der Außenseite bzw. der Innenseite des Gewebes 51 entfernbar befestigt werden.

Die elektrischen Komponenten der Ausführungsform, wie mit Fig. 3 dargestellt, entsprechen denen, wie sie in Fig. 2 gezeigt sind. Insbesondere umfaßt das erste Kopplerelement 20A eine erste Spule 30, und das zweite Kopplerelement 20B umfaßt eine zweite Spule 35, wobei beide Spulen 30, 35 einen lose gekoppelten Transformator bilden.

Der Vorteil, den diese spezifische erste Ausführungsform der Erfindung mit sich bringt, besteht darin, daß das Gewebe 51 an der Stelle, wo der induktive Koppler 20 angebracht wird, nicht durchstochen werden muß. Da das Magnetfeld durch das Gewebe hindurchtreten muß, ist jedoch die elektrische Effizienz eines derartigen Aufbaus etwas geringer als von irgendeinem anderen Aufbau, wo das Gewebe 51 an der Stelle, wo das erste Kopplerelement 20A und das zweite Kopplerelement 20B zusammengefügt werden, durchstochen wird.

Bei der in Fig. 3 dargestellten Ausführungsform umfaßt die zweite Koppeleinheit 20B eine an einer Seite der Funktionsschicht bzw. des Laminats positionierte periphere Schulter 90 und eine die Schulter peripher überlappende periphere Gegeneinrichtung 91, die an der anderen Seite der flexiblen Materialschicht 51 positioniert und auf eine Weise an der zweiten Koppeleinheit 20B befestigt ist, daß die Funktionsschicht auf wasserdichte Weise zwischen der Schulter 90 und der Gegeneinrichtung 91 festgeklemmt ist.

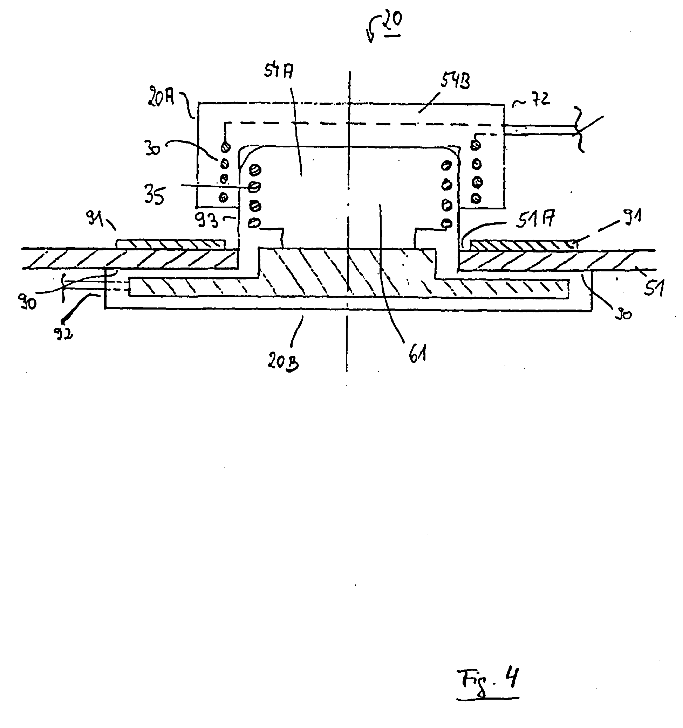

Fig. 4 zeigt einen Querschnitt durch eine zweite Ausführungsform der in Fig. 1 dargestellten Jacke 10 gemäß der Erfindung. Bei dieser Ausführungsform wird eine flexible Materialschicht oder ein flexibles Gewebe 51 der Jacke 10 in einem kreisförmigen Bereich 51A durchstochen. Das zweite Kopplerelement 20B wird z.B. durch eine nicht gezeigte Kleberschicht an der Innenseite des Gewebes 51 befestigt. Das zweite Kopplerelement 20B umfaßt einen zylindrisch geformten Vorsprung 61, an dem das erste Kopplerelement 20A befestigt werden kann.

Die elektrischen Komponenten der in Fig. 4 dargestellten Ausführungsform entsprechen denen, wie sie in Fig. 2 und 3 gezeigt sind. Insbesondere umfaßt das erste Kopplerelement 20A eine erste Spule 30, und das zweite Kopplerelement 20B umfaßt eine zweite Spule 35, wobei beide Spulen 30, 35 einen lose gekoppelten Transformator bilden.

Bei dieser Ausführungsform muß der Magnetfluß nicht durch ein Gewebe hindurchtreten. Somit kann diese Version im Hinblick auf den Energie- und Signaltransport effektiver ausgestaltet werden.

Die Referenzzahlen 54A und 54B bezeichnen fakultative Ferritkerne innerhalb des ersten Kopplerelements 24A bzw. innerhalb des zweiten Kopplerelements 24B. Eines der beiden Kopplerelemente 24A, 24B oder beide von ihnen können mit einem ferromagnetischen Ferritkern ausgestattet sein, um die Koppeleffizienz zu verbessern.

Bei der in Fig. 4 gezeigten Ausführungsform umfaßt die zweite Koppeleinheit 20B eine an einer Seite der flexiblen Materialschicht 51 positionierte periphere Schulter 90. Das zweite Koppelelement 20B weist eine Plattform 92 auf, die einen internen Abschnitt bildet, und einen Vorsprung 93, der sich von der Plattform 92 aus durch die aufnehmende Öffnung 51A erstreckt und einen externen Abschnitt bildet und in dem die zweite Spule 35 eingebettet ist, wobei die Schulter 90 am Übergang von der Plattform 92 zum Vorsprung 93 ausgebildet ist. Das erste Koppelelement 20A umfaßt ein haubenförmiges Teil 72, der so ausgelegt ist, daß er den Vorsprung des zweiten Koppelelements 20B abdeckt und in dem die zweite Spule 35 in einer Position eingebettet ist, die radial neben der zweite Spule 35 liegt, wenn das haubenförmige Teil 72 den Vorsprung des zweiten Koppelelements 20B abdeckt.

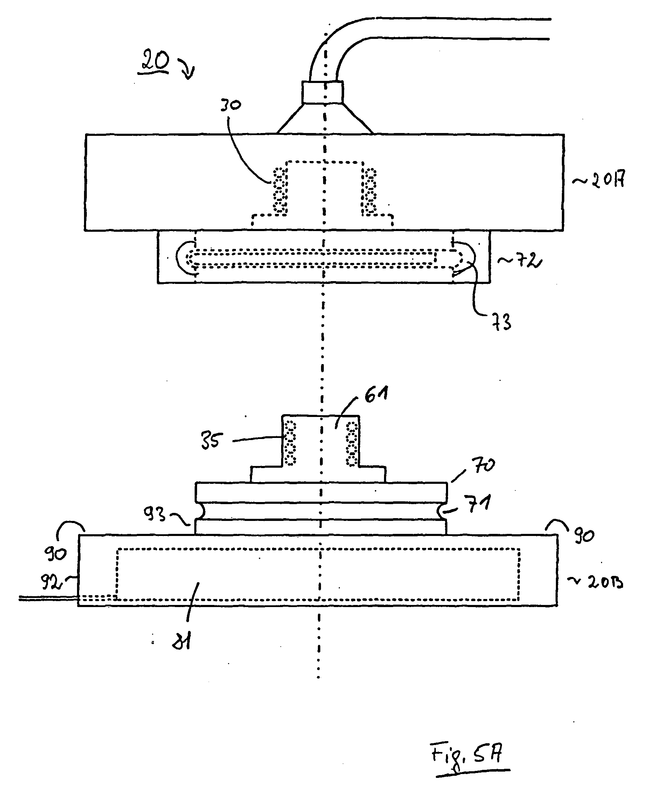

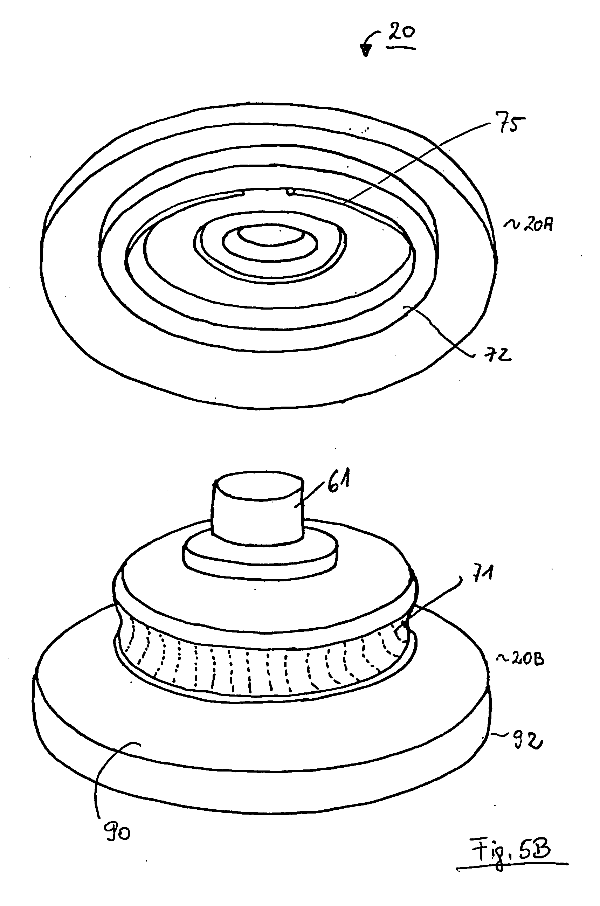

Fig. 5 zeigt die Abwandlung des in Fig. 4 dargestellten induktiven Kopplers 20. Sofern nichts anderes angegeben ist, sollten die Bezugszahlen wie für Fig. 4 gelesen werden. Insbesondere zeigt Fig. 5a einen Querschnitt durch einen derartigen Koppler 20, wohingegen Fig. 5b eine entsprechende Perspektivansicht davon zeigt.

Bei der in Fig. 5 gezeigten Ausführungsform umfaßt die zweite Koppeleinheit 20B eine an einer Seite der flexiblen Materialschicht 51 positionierte periphere Schulter 90. Das zweite Koppelelement 20B weist eine Plattform 92 auf, die einen internen Abschnitt bildet, und einen Vorsprung 93, der sich von der Plattform 92 aus durch die aufnehmende Öffnung 51A erstreckt und einen externen Abschnitt bildet und in dem die zweite Spule 35 eingebettet ist, wobei die Schulter 90 am Übergang von der Plattform 92 zum Vorsprung 93 ausgebildet ist. Das erste Koppelelement 20A umfaßt ein haubenförmiges Teil 72, der so ausgelegt ist, daß er den Vorsprung des zweiten Koppelelements 20B abdeckt und in dem die erste Spule 30 in einer Position eingebettet ist, die radial neben der zweite Spule 35 liegt, wenn das haubenförmige Teil 72 den Vorsprung des zweiten Koppelelements 20B abdeckt.

Der induktive Koppler 20, wie er in Fig. 5 gezeigt ist, ist hinsichtlich bestimmter mechanischer Eigenschaften verbessert.

Die elektrischen Komponenten der Ausführungsform, wie mit Fig. 3 dargestellt, entsprechen denen, wie sie in Fig. 2, 3 und 4 gezeigt sind. Insbesondere umfaßt das erste Kopplerelement 20A eine erste Spule 30, und das zweite Kopplerelement 20B umfaßt eine zweite Spule 35, wobei beide Spulen 30, 35 einen lose gekoppelten Transformator bilden.

Das zweite Kopplerelement 20B umfaßt ein zylindrisches Eingriffsstück 70 mit einer darin ausgebildeten Umfangsnut 71. Das haubenförmige Teil 72 ist dafür ausgelegt, mit dem zylindrischen Eingriffsstück 70 des zweiten Kopplerelements 20B zusammengefügt zu werden. Das haubenförmige Teil 72 umfaßt auf seiner Innenseite eine Nut 73, die der Nut 71 des zylindrischen Eingriffsstücks 70 des zweiten Kopplerelements 20B entspricht. Die Nut 73 ist mit einem Federelement 75 versehen, um eine Einschnappbefestigung sowohl des ersten als auch des zweiten Kopplerelements 20A, 20B bereitzustellen.

Bei einer noch weiter entwickelten Version der Ausführungsform umfaßt ein zweites Kopplerelement 20B auf der Bodenseite davon eine Kammer 81, die dafür ausgelegt ist, eine nicht gezeigte Elektronikschaltung aufzunehmen, insbesondere eine Leiterplatte, wobei darauf alle notwendigen Komponenten zur Ausbildung der Elektronikeinheit 42 montiert sind.

Bei einer weiteren nicht gezeigten Variante kann die Elektronikeinheit 41 in dem ersten Kopplerelement 20A angeordnet werden.

Bei alternativen Varianten können das erste und zweite Kopplerelement 20A, 20B über andere Mittel befestigt werden, z.B. durch Schraubmittel, Einschnappglieder, Permanentmagnete usw.

Die Ausführungsformen der vorliegenden Erfindung können durch Bereitstellung eines Kleidungsstücks 10 weiter verbessert werden, das verbesserte Textilmaterialien mit einer gewissen Art einer Membran umfaßt (z.B. aus mikroporösem gerecktem Polytetrafluorethylen ePTFE hergestellt), die für Wasserdampf durchlässig ist, aber für Wasser in flüssiger Form undurchlässig ist. Eine derartige Membran wird häufig dazu eingesetzt, die Verdampfung von Schweiß zu gestatten, der von dem das Kleidungsstück 10 tragenden Benutzer abgegeben wird, während gleichzeitig das Durchdringen von flüssigem Wasser aus der Umgebung in die Innenseite des Kleidungsstücks 10 blockiert wird, wo eindringendes flüssiges Wasser dem Benutzer gravierendes Unbehagen verursachen würde. Bei bevorzugten Ausführungsformen wird die Membran, die im allgemeinen mechanisch empfindlich ist, in einem Laminat aus zwei oder mehr Schichten verwendet. Bei einer Ausführungsform ist das die Außenseite des Kleidungsstücks 10 bildende Gewebe identisch mit einer der Schichten des Membranlaminats. Bei einer besonders bevorzugten Ausführungsform ist die Membran auf einer Seite von einem ersten Gewebe und auf der anderen Seite von einem zweiten Gewebe bedeckt, wobei alle diese Schichten ein dreischichtiges Laminat bilden, und wobei das dreischichtige Laminat auf der Innenseite des Kleidungsstücks 10 eingesetzt ist.

Bei Ausführungsformen der vorliegenden Erfindung, bei denen eines der Kopplerelemente 20A, 20B mit Hilfe eines Klebers an das Gewebe des Kleidungsstücks 10 geklebt ist, kann auf der Innenseite des Kleidungsstücks 10, das heißt der Seite des Kleidungsstücks 10, die dem Körper des Benutzers zugewandt ist, ein Membranlaminat vorgesehen sein. Um sicherzustellen, daß bei Ausführungsformen, bei denen ein Kopplerelement 20A, 20B durch Ankleben am Umfang einer in das Gewebe des Kleidungsstücks 10 geschnittenen Öffnung angeklebt wird, kein flüssiges Wasser in den Raum auf der Innenseite des Kleidungsstücks 10 eindringen kann, muß der Bereich, wo das Element an das Gewebe des Kleidungsstücks 10 geklebt wird, wasserdicht gemacht werden.

Dies kann bevorzugt durch Wahl eines entsprechenden Klebers sowie durch ein entsprechendes Verfahren zum Anbringen des Klebers sichergestellt werden. Bei bevorzugten Ausführungsformen umfaßt das Kleidungsstück 10 ein Membranlaminat, daß durch einen Polyurethankleber, durch Kleber, die fluorpolymere umfassen, durch einen Silikonkleber oder durch einen reaktiven Heißschmelzkleber an den zweiten Koppler 20B geklebt wird. Ein reaktiver Heißschmelzkleber ist ein Kleber oder ein Dichtmittel, das bei erhöhten Temperaturen als eine flüssige Schmelze aufgetragen und zum Reagieren gebracht werden kann, um ein nicht schmelzbares duroplastisches Kunststoffpolymer mit verbesserten Klebe- und Abdichteigenschaften zu werden.

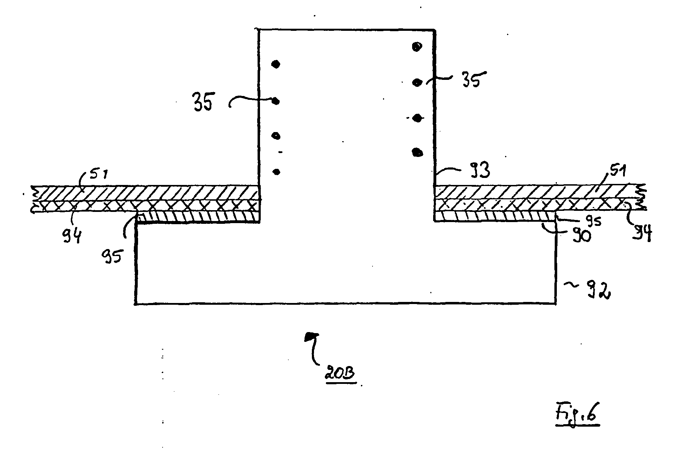

Fig. 6 zeigt einen Querschnitt durch ein zweites Kopplerelement 20B, das an ein Laminat geklebt ist, das eine ein Kleidungsstück 10 gemäß der Erfindung bildende flexible Materialschicht 51 umfaßt. Die flexible Materialschicht 51 ist unter Ausbildung eines Laminats mit einer Funktionsschicht 94 kombiniert. Der Kleber ist mit der Bezugszahl 95 bezeichnet. Die Schulter 90 des zweiten Kopplerelements 20B ist über den Kleber 95 an der Funktionsschicht 94 befestigt. Wenngleich das dargestellte Laminat nur zwei Schichten aufweist, können andere Ausführungsformen Laminate mit mehreren Schichten verwenden. Die Bezugszahl 35 zeigt die zweite Spule an. Bei diesem besonderen Fall ist die allgemeine Form des zweiten Kopplerelements 20B die gleiche, wie mit Fig. 4 gezeigt; es können jedoch auch Varianten davon verwendet werden. Es sei angemerkt, daß sich diese Art von Verbindung auf Kleberbasis insbesondere auch auf die in Fig. 5 gezeigte Ausführungsform anwenden läßt.

In Verbindung mit der vorliegenden Erfindung wird bevorzugt ein Kleber mit geringer Viskosität eingesetzt, um sicherzustellen, daß der Kleber in seinem flüssigen Zustand durch die Gewebeschicht des Membranlaminats hindurchgehen kann, um direkt mit der Membranschicht zu verkleben. Der Einsatz eines Klebers mit niedriger Viskosität erleichtert zudem die Imprägnierung der Mikroporen in der Membranschicht mit Kleber, so daß die Klebeverbindung dauerhafter ist. Entweder weist der bevorzugte Kleber an sich einen ausreichend niedrigen Viskositätswert auf oder der Kleber kann z.B. durch Erwärmen in einen Zustand niedriger Viskosität umgeformt werden.

Eine weitere vorteilhafte Option besteht in der Bereitstellung eines Membranlaminats, bei der die für das klebende Verbinden mit dem Koppler verwendete Gewebeschicht aus schmelzbaren Fasern hergestellt ist (z.B. Polypropylen, Polyester, Polyamid). Beim Befestigen des Kopplers können die schmelzbaren Fasern erwärmt werden und das Verbinden kann man durch mechanisches Drücken des Kopplers gegen das Gewebe erhalten. Diese Technologie funktioniert jedoch nicht, wenn unschmelzbare Fasern verwendet werden, z.B. Aramidfasern in Kleidungsstücken 10 für Feuerwehrleute oder dergleichen. Eine weitere Verbesserung kann man erhalten, wenn man in dem Membranlaminat ein Gewebe verwendet, das aus einem Garn gewebt ist, das aus einer Reihe von aus verschiedenen Materialien hergestellten Strängen besteht. Das Garn kann beispielsweise mindestens einen Strang aus einem schmelzbaren Material und mindestens einen Strang aus einem unschmelzbaren Material umfassen. Indem ein solches Garn verwendet wird, kann sichergestellt werden, daß das resultierende Membranlaminat sowohl mechanisch hitzebeständig als auch auch bei Erwärmung klebefähig ist.

Wenn eine Klemmplatte verwendet wird, um einen Koppler an einem ein Membranlaminat umfassenden Kleidungsstück 10 zu befestigen, muß der Kontaktdruck ausreichend hoch sein, so daß kein flüssiges Wasser den Kontaktbereich zwischen dem Koppler und dem Membranlaminatgewebe bis zur Innenseite des Kleidungsstücks 10 penetrieren kann. Mechanisch kann dies durch Verwendung von zwei entsprechenden Schraubgewinden an den entsprechenden Kopplerelementen 20A, 20B erreicht werden. Bei besonders bevorzugten Ausführungsformen wird ein Abdichtungsmittel zwischen das Gewebe des Membranlaminats und die drückende Oberfläche des jeweiligen Kopplerelements 20A, 20B gegeben.

Die Ausführungsformen der Varianten, wie sie oben beschrieben sind, sind von einer Art, bei der die angebrachte elektrische Netzwerkgerätschaft leicht entfernt werden kann.

Insbesondere können wasserdichte Ausführungsformen des Kleidungsstücks auch in widrigen oder gefährlichen Umgebungen und sogar in Unterwasserbedingungen verwendet werden. Es ist sogar möglich, ein Kleidungsstück gemäß der Erfindung zu haben, das unter den gleichen Bedingungen wie das Material des Kleidungsstücks gewaschen werden kann.

Alle oben mit verschiedenen Ausführungsformen offenbarten Merkmale können miteinander kombiniert werden.

## Patentansprüche

1. Induktive Bekleidungsstückschnittstelle (20) mit einer flexiblen Materialschicht (51) und einer induktiven Koppeleinrichtung (20A, 20B), die zum Übertragen von elektrischem Strom und/oder von Daten zwischen einer Innenseite und einer Außenseite der flexiblen Materialschicht (51) ausgebildet ist, wobei:
die flexible Materialschicht (51) mit einer Öffnung (51 A) versehen ist;
die induktive Koppeleinrichtung (20A, 20B) eine erste Koppeleinheit (20A) und eine zweite Koppeleinheit (20B) aufweist, die auf verschiedenen Seiten der flexiblen Materialschicht (51) angeordnet sind;
die erste Koppeleinheit (20A) einen ersten Koppelabschnitt aufweist, der von der Außenseite der flexiblen Materialschicht (51) aus zugänglich ist und mit einer ersten Spule (30) versehen ist, die in ein isolierendes Material des ersten Koppelabschnitts eingebettet ist und für eine operative Verbindung mit einem auf der Außenseite der flexiblen Materialschicht (51) angeordneten externen elektrischen System ausgelegt ist;
die zweite Koppeleinheit (20B) an der flexiblen Materialschicht (51) befestigt ist und einen zweiten Koppelabschnitt aufweist, der in der Öffnung (51 A) der flexiblen Materialschicht (51) aufgenommen ist, für eine lösbare Zusammenfügung mit dem ersten Koppelabschnitt ausgebildet ist und mit einer zweiten Spule (35) versehen ist, die in ein isolierendes Material des zweiten Koppelabschnitts eingebettet ist und für eine operative Verbindung mit einem auf der Innenseite der flexiblen Materialschicht (51) angeordneten internen elektrischen System ausgelegt ist; und
die erste und zweite Koppeleinheit (20A, 20B) so ausgelegt sind, daß die erste und zweite Spule (30, 35) in der Lage sind, die induktive Übertragung von elektrischem Strom und/oder Daten durchzuführen, wenn der erste und zweite Koppelabschnitt zusammengefügt sind.

2. Schnittstelle (20) nach Anspruch 1, wobei die zweite Koppeleinheit (20B) einen internen Abschnitt aufweist, der sich von einer Innenfläche der flexiblen Materialschicht (51) aus erstreckt, und einen externen Abschnitt aufweist, der sich von einer Außenfläche der flexiblen Materialschicht (51) aus erstreckt.

3. Schnittstelle (20) nach Anspruch 1 oder 2, wobei die zweite Koppeleinheit (20B) auf wasserdichte Weise in einer aufnehmenden Öffnung einer wasserdichten Funktionsschicht befestigt ist, mit der die flexible Materialschicht (51) ausgestattet ist.

4. Schnittstelle (20) nach Anspruch 3, wobei die wasserdichte Verbindung zwischen der zweiten Koppeleinheit (20B) und der Funktionsschicht mit Hilfe eines wasserdichten Klebers gebildet ist.

5. Schnittstelle (20) nach Anspruch 3 oder 4, wobei die flexible Materialschicht (51) und die Funktionsschicht Komponenten eines Laminats mit mindestens zwei Laminatschichten sind.

6. Schnittstelle (20) nach einem der Ansprüche 3 bis 5, wobei die zweite Koppeleinheit (20B) eine periphere Schulter (90), die gegen eine Seite der Funktionsschicht bzw. des Laminats positioniert ist, und eine die Schulter (90) peripher überlappende periphere Gegeneinrichtung (91), die gegen die andere Seite der Funktionsschicht bzw. des Laminats positioniert ist und auf eine Weise an der zweiten Koppeleinheit (20B) befestigt ist, daß die Funktionsschicht auf wasserdichte Weise zwischen der Schulter (90) und der Gegeneinrichtung (91) festgeklemmt ist, aufweist.

7. Schnittstelle (20) nach einem der Ansprüche 2 bis 6,
wobei die zweite Koppeleinheit (20B) eine den internen Abschnitt bildende Plattform (92) und einen Vorsprung (93) aufweist, der sich von der Plattform (92) aus durch die aufnehmende Öffnung (51A) erstreckt und den externen Abschnitt bildet, wobei in den Vorsprung (93) die zweite Spule (35) eingebettet ist und die Schulter (90) am Übergang von der Plattform (92) zum Vorsprung (93) ausgebildet ist, und
wobei die erste Koppeleinheit (20A) einen haubenförmigen Teil (72) umfaßt, der so ausgelegt ist, daß er den Vorsprung der zweiten Koppeleinheit (20B) abdeckt, wobei in den haubenförmigen Teil (72) die erste Spule (30) in einer Position eingebettet ist, die radial neben der zweiten Spule (35) liegt, wenn der haubenförmige Teil (72) den Vorsprung der zweiten Koppeleinheit (20B) abdeckt.

8. Schnittstelle (20) nach Anspruch 7, wobei der Vorsprung (93) der zweiten Koppeleinheit (20B) und der haubenförmige Teil (72) der ersten Koppeleinheit (20A) je eine zylindrische Form aufweisen.

9. Schnittstelle (20) nach Anspruch 8, wobei die Plattform (92) der zweiten Koppeleinheit (20B) zylinderförmig ist und einen Durchmesser aufweist, der größer ist als der Zylinderdurchmesser des Vorsprungs (93), die Schulter (90) am Übergang vom größeren Durchmesser zum kleineren Durchmesser ausgebildet ist und die Gegeneinrichtung (91) ringförmig ist.

10. Schnittstelle (20) nach Anspruch 9, wobei die ringförmige Gegeneinrichtung (91) auf den zylinderförmigen Vorsprung (93) geschraubt ist.

11. Schnittstelle (20) nach einem der Ansprüche 1 bis 10, wobei die erste Koppeleinheit (20A) und die zweite Koppeleinheit (20B) mit Hilfe eines Schraubmechanismus lösbar miteinander verbbindbar sind.

12. Schnittstelle (20) nach einem der Ansprüche 1 bis 10, wobei die erste Koppeleinheit (20A) und die zweite Koppeleinheit (20B) mit Hilfe eines Schnappmechanismus lösbar miteinander verbbindbar sind.

13. Schnittstelle (20) nach einem der Ansprüche 1 bis 10, wobei die erste Koppeleinheit (20A) und die zweite Koppeleinheit (20B) mit Hilfe von Permanentmagneten lösbar miteinander verbbindbar sind.

14. Schnittstelle (20) nach einem der Ansprüche 1 bis 13, wobei mindestens eine der ersten und der zweiten Koppeleinheiten (20A, 20B) eine Elektronikschaltung enthält, die dafür ausgelegt ist, durch die Koppeleinrichtung zu koppelnde Datensignale gemäß mindestens einem vordefinierten Datenübertragungsprotokoll zu konvertieren

15. Bekleidungsstück (10), das mit einer Bekleidungsstückschnittstelle (20) nach einem der Ansprüche 1 bis 14 versehen ist, wobei die flexible Materialschicht (51) der Bekleidungsstückschnittstelle (20) durch mindestens eine Schicht (51) aus einem flexiblen Material des Bekleidungsstücks (10) gebildet ist.

16. Bekleidungsstück (10) nach Anspruch 15, wobei die mindestens eine Schicht (51) aus flexiblem Material einen textilen Stoff umfaßt.

17. Bekleidungsstück (10) nach Anspruch 15 oder 16, wobei die mindestens eine Schicht (51) aus flexiblem Material eine wasserdichte Funktionsschicht umfaßt, die für Wasserdampf durchlässig ist, aber für flüssiges Wasser undurchlässig ist.

18. Bekleidungsstück (10) nach Anspruch 17, wobei die wasserdichte Funktionsschicht eine Polytetrafluorethylen-Membran umfaßt.

19. Bekleidungsstück (10) nach einem der Ansprüche 15 bis 18, wobei die erste Koppeleinheit (20A) und die zweite Koppeleinheit (20B) lösbar an der Schicht (51) aus flexiblem Material befestigt sind.

20. Bekleidungsstück (10) nach Anspruch 19, wobei die erste Koppeleinheit (20A) und die zweite Koppeleinheit (20B) mit Hilfe von Klettverschlüssen (53A, 53B) lösbar an der Schicht (51) aus flexiblem Material befestigt sind.

21. Bekleidungsstück (10) nach nach einem der Ansprüche 15 bis 18, wobei die zweite Koppeleinheit (20B) permanent an der Schicht (51) aus flexiblem Material fixiert ist.

22. Bekleidungsstück (10) nach Anspruch 21, wobei die erste Koppeleinheit (20A) lösbar an der Schicht (51) aus flexiblem Material befestigt ist.

23. Bekleidungsstück (10) nach Anspruch 22, wobei die erste Koppeleinheit (20A) mit Hilfe eines Klettverschlusses (53A) lösbar an der Schicht (51) aus flexiblem Material befestigt ist.

24. Bekleidungsstück (10) nach nach einem der Ansprüche 15 bis 23, wobei die zweite Koppeleinheit (20B) einen internen Abschnitt aufweist, der sich von einer Innenfläche der Schicht (51) aus flexiblem Material aus erstreckt, und einen externen Abschnitt aufweist, der sich von der Außenfläche der Schicht (51) aus flexiblem Material aus erstreckt.

25. Bekleidungsstück (10) nach nach einem der Ansprüche 15 bis 24, mit einer wasserdichten Funktionsschicht (94), die die Schicht (51) aus flexiblem Material zumindest in einem Teil des Bekleidungsstücks (10) ausfüttert,
wobei die Funktionsschicht (94) mit einer aufnehmenden Öffnung versehen ist, die mit der aufnehmenden Öffnung (51 A) der Schicht (51) aus flexiblem Material fluchtet,
und wobei die zweite Koppeleinheit (20A) in der aufnehmenden Öffnung der Funktionsschicht (94) auf wasserdichte Weise bezüglich der Funktionsschicht (94) befestigt ist.

26. Bekleidungsstück (10) nach Anspruch 25, wobei die Schicht (51) aus flexiblem Material und die Funktionsschicht Komponenten eines Laminats mit mindestens zwei Laminatschichten sind.

27. Bekleidungsstück (10) nach Anspruch 26, wobei die wasserdichte Verbindung zwischen der ersten Koppeleinheit (20A) und dem Laminat mit Hilfe eines wasserdichten Klebers hergestellt wird.

28. Bekleidungsstück (10) nach einem der Ansprüche 17 bis 27, wobei die zweite Koppeleinheit (20B) eine an einer Seite der Funktionsschicht bzw. des Laminats positionierte periphere Schulter (90) umfaßt sowie eine die Schulter peripher überlappende periphere Gegeneinrichtung (91), die an der anderen Seite der Funktionsschicht bzw. des Laminats positioniert ist und auf eine Weise an der zweiten Koppeleinheit (20B) befestigt ist, daß die Funktionsschicht auf wasserdichte Weise zwischen der Schulter (90) und der Gegeneinrichtung (91) festgeklemmt ist.

29. Bekleidungsstück (10) nach einem der Ansprüche 24 bis 28,
wobei die zweite Koppeleinheit (20B) eine den internen Abschnitt bildende Plattform (92) und einen Vorsprung (93) aufweist, der sich von der Plattform (92) aus durch die aufnehmende Öffnung (51A) erstreckt und den externen Abschnitt bildet, wobei die zweite Spule (35) in den Vorsprung (93) eingebettet ist und die Schulter (90) am Übergang von der Plattform (92) zum Vorsprung (93) ausgebildet ist, und
wobei die erste Koppeleinheit (20A) einen haubenförmigen Teil (72) umfaßt, der so ausgelegt ist, daß er den Vorsprung der zweiten Koppeleinheit (20B) abdeckt, wobei in den haubenförmigen Teil (72) die zweite Spule (35) in einer Position eingebettet ist, die radial neben der ersten Spule (30) liegt, wenn das haubenförmige Teil (72) den Vorsprung der ersten Koppeleinheit abdeckt.

30. Bekleidungsstück (10) nach Anspruch 29, wobei der Vorsprung (93) der zweiten Koppeleinheit (20B) und der haubenförmige Teil (72) der ersten Koppeleinheit (20A) jeweils eine zylindrische Form aufweisen.

31. Bekleidungsstück (10) nach Anspruch 29, wobei
die Plattform (92) der zweiten Koppeleinheit (20B) zylinderförmig ist und einen Durchmesser aufweist, der größer ist als der Zylinderdurchmesser des Vorsprungs (93),
die Schulter (90) am Übergang vom größeren Durchmesser zum kleineren Durchmesser ausgebildet ist,
und die Gegeneinrichtung (91) ringförmig ist.

32. Bekleidungsstück (10) nach Anspruch 31, wobei die ringförmige Gegeneinrichtung (91) in den zylinderförmigen Vorsprung (93) geschraubt ist.

## Claims

1. An inductive clothing article interface (20) with a flexible material layer (51) and an inductive coupling device (20A, 20B), designed to transmit electrical current and/or data between an inside and an outside in a flexible material layer (51), whereby:
the flexible material layer (51) is provided with an opening (51A);
the inductive coupling device (20A, 20B) has a first coupling unit (20A) and a second coupling unit (20B) arranged on different sides of the flexible material layer (51);
the first coupling unit (20A) has a first coupling section, which is accessible from the outside of the flexible material layer (51) and is provided with a first coil (30), which is embedded in an insulating material of the first coupling section and is designed for operative connection to an external electrical system arranged on the outside of the flexible material layer (51);
the second coupling unit (20B) is attached to the flexible material layer (51) and has a second coupling section accommodated in the opening (51A) of the flexible material layer (51), which is designed for releasable joining to the first coupling section and is provided with a second coil (35), which is embedded in an insulating material of the second coupling section and is designed for operative connection to an internal electrical system arranged on the inside of the flexible material layer (51); and
the first and second coupling units (20A, 20B) are designed so that the first and second coils (30, 35) are capable of inductive transmission of electric current and/or data when the first and second coupling sections are joined.

2. An interface (20) according to claim 1, whereby said coupling unit (20B) has an internal section that extends from an inside surface of the flexible material layer (51) and has an external section that extends from an outside surface of the flexible material layer (51).

3. An interface (20) according to claim 1 or 2, whereby the second coupling unit (20B) is attached water-tight in a receiving opening of a water-tight functional layer with which the flexible material layer (51) is equipped.

4. An interface (20) according to claim 3, whereby the water-tight connection between the second coupling unit (20B) and the functional layer is formed by means of a water-tight adhesive.

5. An interface (20) according to claim 3 or 4, whereby the flexible material layer (51) and the functional layer are components of a laminate with at least two laminate layers.

6. An interface (20) according to one of claims 3 through 5, whereby the second coupling unit (20B) has a peripheral shoulder (30) that is positioned against one side of the functional layer or laminate arid a peripheral mating device (91) overlapping the shoulder (90) peripherally, which is positioned against the other side of the functional layer or laminate and attached to the second coupling unit (20B), so that the functional layer is firmly clamped water-tight between the shoulder (90) and the mating device (91).

7. An interface (20) according to one of claims 2 through 6,
whereby the second coupling unit (20B) has a platform (92) forming the internal section and a protrusion (93) that extends from the platform (92) through the receiving opening (51A) and forms the external section, the second coil (35) is embodied in the protrusion (93) and the shoulder (90) is formed on the transition from the platform (92) to the protrusion (93), and
whereby the first coupling unit (20A) includes a hood-like part (72), designed so that it covers the protrusion of the second coupling unit (20B), the first coil (30) being embedded in the hood-like part (72) in a position that lies radially next to the second coil (35) when the hood-like part (72) covers the protrusion of the second coupling unit (20B).

8. An interface (20) according to claim 7, whereby the protrusion (93) of the second coupling unit (20B) and the hood-like part (72) of the first coupling unit (20A) each has a cylindrical shape.

9. An interface (20) according to claim 8, whereby the platform (92) of the second coupling unit (20B) is cylindrical and has a diameter greater than the cylindrical diameter of the protrusion (93), the shoulder (90) is formed at the transition from larger diameter to smaller diameter, and the mating device (91) is ring-shaped.

10. An interface (20) according to claim 9, whereby the ring-shaped mating device (91) is screwed onto the cylindrical protrusion (93).

11. An interface (20) according to one of claims 1 through 10, whereby the first coupling unit (20A) and the second coupling unit (20B) can be connected to each other so as to be releasable by means of a screw mechanism.

12. An interface (20) according to one of claims 1 through 10, whereby the first coupling unit (20A) and the second coupling unit (20B) can be connected to each other so as to be releasable by means of a snap mechanism.

13. An interface (20) according to one of claims 1 through 10, whereby the first coupling unit (20A) and the second coupling unit (20B) can be connected to each other so as to be releasable by means of permanent magnets.

14. An interface (20) according to one of claims 1 through 13, whereby at least one of the first and second coupling units (20A, 20B) contains an electronic circuit designed to convert data signals to be coupled through the coupling device, according to at least one predefined data-transmission protocol.

15. A clothing article (10) that is provided with a clothing-article interface (20) according to one of claims 1 through 14, whereby the flexible material layer (51) of the clothing-article interface (20) is formed by at least one layer (51) of a flexible material of the clothing article (10).

16. A clothing article (10) according to claim 15, whereby the at least one layer (51) of flexible material comprises a textile material.

17. A clothing article (10) according to claim 15 or 16, whereby the at least one layer (51) of flexible material includes a water-tight functional layer that is permeable to water vapor, but impermeable to liquid water.

18. A clothing article (10) according to claim 17, whereby the water-tight functional layer includes a polytetrafluoroethylene membrane.

19. A clothing article (10) according to one of claims 15 through 18, whereby the first coupling unit (20A) and the second coupling unit (20B) are attached releasably to the layer (51) of flexible material.

20. A clothing article (10) according to claim 19, whereby the first coupling unit (20A) and the second coupling unit (20B) are attached by means of Velcro closures (53A, 53B) releasably to layer (51) of flexible material.

21. A clothing article (10) according to one of claims 15 through 18, whereby the second coupling unit (20B) is attached permanently to a layer (51) of flexible material.

22. A clothing article (10) according to claim 21, whereby the first coupling unit (20A) is attached releasably to the layer (51) of flexible material.

23. A clothing article (10) according to claim 22, in which the first coupling unit (20A) is attached releasably to the layer (51) of flexible material by means of a Velcro closure (53A).

24. A clothing article (10) according to one of claims 15 through 23, whereby the second coupling unit (20B) has an internal section that extends from an inside surface layer (51) in a flexible material and has an external section that extends from the outside surface layer (51) of flexible material.

25. A clothing article (10) according to one of claims 15 through 24, with a water-tight functional layer (94) that lines the layer (51) of flexible material, at least in part of the clothing article (10),
whereby the functional layer (94) is provided with a receiving opening that is flush with the receiving opening (51A) of the layer (51) of flexible material,
and whereby the second coupling unit (20A) is attached in the receiving opening of functional layer (94) water-tight with respect to the functional layer (94).

26. A clothing article (10) according to claim 25, whereby the layer (51) of flexible material and the functional layer are components of a laminate with at least two laminate layers.

27. A clothing article (10) according to claim 26, whereby the water-tight connection between the first coupling unit (20A) and the laminate is produced by means of a water-tight adhesive.

28. A clothing article (10) according to one of claims 17 through 27, whereby the second coupling unit (20B) includes a peripheral shoulder (90) positioned on one side of the functional layer or laminate, as well as a peripheral mating device (91) overlapping the shoulder peripherally, which is positioned on the other side of the functional layer or laminate and attached to the second coupling unit (20B), so that the functional layer is firmly clamped water-tight between the shoulder (90) and the mating device (91).

29. A clothing article (10) according to one of claims 24 through 28,
whereby the second coupling unit (20B) has a platform (92) forming the internal section and a protrusion (93), which extends from the platform (92) through the receiving opening (51A) and forms the external section, whereby the second coil (35) is embedded in the protrusion (93) and the shoulder (90) is formed on the transition from the platform (92) to the protrusion (93), and
whereby the first coupling (20A) includes a hood-like part (72), designed so that it covers the protrusion of the second coupling unit (20B), whereby the second coil (35) is embedded in the hood-like part (72) in a position that lies radially next to the first coil (30) when the hood-like part (72) covers the protrusion of the first coupling unit.

30. A clothing article (10) according to claim 29, whereby which the protrusion (93) of the second coupling unit (20B) and the hood-like part (72) of the first coupling unit (20A) each has a cylindrical shape.

31. A clothing article (10) according to claim 29, whereby
the platform (92) of the second coupling unit (20B) is cylindrical and has a diameter greater than the cylindrical diameter of protrusion (93),
the shoulder (90) is formed on the transition from greater diameter to smaller diameter, and the mating device (91) is ring-shaped.

32. A clothing article (10) according to claim 31, whereby the ring-shaped mating device (91) is screwed into the cylindrical protrusion (93).

## Revendications

1. Une interface inductive pour article vestimentaire (20) comprenant une couche de matériau souple (51) et un dispositif de couplage inductif (20A, 20B) conçue pour transmettre un courant électrique, des données ou les deux entre l'intérieur et l'extérieur de ladite couche de matériau souple (51), dans laquelle :
la couche de matériau souple (51) comporte une ouverture (51A) ;
le dispositif de couplage inductif (20A, 20B) comporte une première unité de couplage (20A) et une seconde unité de couplage (20B) disposées sur des côtés différents de la couche de matériau souple (51) ;
la première unité de couplage (20A) comprend un premier élément de couplage accessible depuis l'extérieur de la couche de matériau souple (51) et comportant une première bobine (30) noyée dans un matériau isolant faisant partie du premier élément de couplage et conçue pour être connectée de façon opérationnelle à un système électrique externe disposé sur l'extérieur de la couche de matériau souple (51) ;
la seconde unité de couplage (20B) est fixée à la couche de matériau souple (51) et comporte un second élément de couplage logé dans l'ouverture (51A) de la couche de matériau souple (51), qui est conçu pour être joint de façon détachable au premier élément de couplage et qui comporte une seconde bobine (35) noyée dans un matériau isolant faisant partie du second élément de couplage et conçue pour être connectée de façon opérationnelle à un système électrique interne disposé sur l'intérieur de la couche de matériau souple (51) ; et
le premier et le second élément de couplage (20A, 20B) sont conçus de façon à ce que la première et la seconde bobine (30, 35) puissent transmettre par induction un courant électrique, des données ou les deux lorsque le premier et le second élément de couplage sont joints.

2. Une interface (20) selon la revendication 1, dans laquelle ladite unité de couplage (20B) comprend une partie interne s'étendant depuis une surface intérieure de la couche de matériau souple (51) et une partie externe s'étendant depuis une surface extérieure de la couche de matériau souple (51).

3. Une interface (20) selon la revendication 1 ou 2, dans laquelle la seconde unité de couplage (20B) est fixée de façon étanche à l'eau dans une ouverture de logement pratiquée dans une couche fonctionnelle étanche à l'eau équipant la couche de matériau souple (51).

4. Une interface (20) selon la revendication 3, dans laquelle le raccord étanche à l'eau entre la seconde unité de couplage (20B) et la couche fonctionnelle est formé au moyen d'un adhésif étanche à l'eau.

5. Une interface (20) selon la revendication 3 ou 4, dans laquelle la couche de matériau souple (51) et la couche fonctionnelle font partie d'une feuille stratifiée comprenant au moins deux couches.

6. Une interface (20) selon une des revendications 3 à 5, dans laquelle la seconde unité de couplage (20B) comporte un épaulement périphérique (30) disposé contre un côté de la couche fonctionnelle ou feuille stratifiée et un dispositif d'accouplement périphérique (91) superposé à l'épaulement (90) de manière périphérique, disposé contre l'autre côté de la couche fonctionnelle ou feuille stratifiée et fixé à la seconde unité de couplage (20B), de façon à ce que la couche fonctionnelle soit serrée de façon ferme et étanche à l'eau entre l'épaulement (90) et le dispositif d'accouplement (91).

7. Une interface (20) selon l'une des revendications 2 à 6,
dans laquelle la seconde unité de couplage (20B) comporte une plateforme (92) formant l'élément interne et une saillie (93) qui dépasse de la plateforme (92) à travers l'ouverture de logement (51A) et forme l'élément externe, la saillie (93) la seconde bobine (35) étant noyée dans la saillie (93) et l'épaulement (90) étant formé à la transition entre la plateforme (92) et la saillie (93),
et dans laquelle la première unité de couplage (20A) comprend une pièce en forme de capuchon (72) conçue pour recouvrir la saillie de la seconde unité de couplage (20B), la première bobine (30) étant noyée dans cette pièce en forme de capuchon (72) dans une position qui la dispose radialement près de la seconde bobine (35) lorsque ladite pièce en forme de capuchon (72) recouvre la saillie de la seconde unité de couplage (20B).

8. Une interface (20) selon la revendication 7, dans laquelle la saillie (93) de la seconde unité de couplage (20B) et la pièce en forme de capuchon (72) de la première unité de couplage (20A) sont toutes deux de forme cylindrique.

9. Une interface (20) selon la revendication 8, dans laquelle la plateforme (92) de la seconde unité de couplage (20B) est cylindrique et a un diamètre supérieur à celui de la saillie cylindrique (93), l'épaulement (90) est formé à la transition entre le grand et le petit diamètre et le dispositif d'accouplement (91) est en forme d'anneau.

10. Une interface (20) selon la revendication 9, dans laquelle le dispositif d'accouplement en forme d'anneau (91) est vissé sur la saillie cylindrique (93).

11. Une interface (20) selon l'une des revendications 1 à 10, dans laquelle la première unité de couplage (20A) et la seconde unité de couplage (20B) peuvent être jointes l'une à l'autre de façon détachable au moyen d'un mécanisme de vissage.

12. Une interface (20) selon l'une des revendications 1 à 10, dans laquelle la première unité de couplage (20A) et la seconde unité de couplage (20B) peuvent être jointes l'une à l'autre de façon détachable au moyen d'un mécanisme à pression.

13. Une interface (20) selon l'une des revendications 1 à 10, dans laquelle la première unité de couplage (20A) et la seconde unité de couplage (20B) peuvent être jointes l'une à l'autre de façon détachable au moyen d'aimants permanents.

14. Une interface (20) selon l'une des revendications 1 à 13, dans laquelle au moins une des première et seconde unités de couplage (20A, 20B) contient un circuit électronique conçu pour convertir des signaux de données couplés par le dispositif de couplage selon au moins un protocole de transmission de données prédéfini.

15. Un article vestimentaire (10) équipé d'une interface pour article vestimentaire (20) selon l'une des revendications 1 à 14, dans lequel la couche de matériau souple (51) de ladite interface pour article vestimentaire (20) est formée par au moins une couche (51) d'un matériau souple dudit article vestimentaire (10).

16. Un article vestimentaire (10) selon la revendication 15, dans lequel au moins une couche de matériau souple (51) comprend un matériau textile.

17. Un article vestimentaire (10) selon la revendication 15 ou 16, dans lequel au moins une couche de matériau souple (51) comprend une couche fonctionnelle étanche à l'eau qui soit perméable à la vapeur d'eau, mais imperméable à l'eau liquide.

18. Un article vestimentaire (10) selon la revendication 17, dans lequel la couche fonctionnelle étanche à l'eau comprend une membrane en polytétrafluoroéthylène.

19. Un article vestimentaire (10) selon l'une des revendications 15 à 18, dans lequel la première unité de couplage (20A) et la seconde unité de couplage (20B) sont jointes de façon détachable à la couche de matériau souple (51).

20. Un article vestimentaire (10) selon la revendication 19, dans lequel la première unité de couplage (20A) et la seconde unité de couplage (20B) sont jointes de façon détachable à la couche de matériau souple (51) au moyen de fermetures Velcro (53A, 53B).

21. Un article vestimentaire (10) selon l'une des revendications 15 à 18, dans lequel la seconde unité de couplage (20B) est fixée de façon permanente à la couche de matériau souple (51).

22. Un article vestimentaire (10) selon la revendication 21, dans lequel la première unité de couplage (20A) est fixée de façon détachable à la couche de matériau souple (51).

23. Un article vestimentaire (10) selon la revendication 22, dans lequel la première unité de couplage (20A) est fixée de façon détachable à la couche de matériau souple (51) au moyen d'une fermeture Velcro (53A).

24. Un article vestimentaire (10) selon l'une des revendications 15 à 23, dans lequel la seconde unité de couplage (20B) comprend une partie interne s'étendant depuis la surface intérieure de la couche de matériau souple (51) et une partie externe s'étendant depuis la surface extérieure de la couche de matériau souple (51).

25. Un article vestimentaire (10) selon l'une des revendications 15 à 24 comportant une couche fonctionnelle étanche à l'eau (94) doublant la couche de matériau souple (51) dans au moins une partie dudit article vestimentaire (10),
dans lequel la couche fonctionnelle (94) comprend une ouverture de logement alignée sur l'ouverture de logement (51A) de la couche de matériau souple (51)
et dans lequel la seconde unité de couplage (20A) est fixée à l'ouverture de logement de la couche fonctionnelle (94) en formant un raccord étanche à l'eau avec cette couche fonctionnelle (94).

26. Un article vestimentaire (10) selon la revendication 25, dans lequel la couche de matériau souple (51) et la couche fonctionnelle font partie d'une feuille stratifiée comprenant au moins deux couches.

27. Un article vestimentaire (10) suivant la revendication 26, dans lequel le raccord étanche à l'eau entre la première unité de couplage (20A) et la feuille stratifiée est réalisé au moyen d'un adhésif étanche à l'eau.

28. Un article vestimentaire (10) suivant l'une des revendications 17 à 27, dans lequel la seconde unité de couplage (20B) comporte un épaulement périphérique (90) disposé d'un côté de la couche fonctionnelle ou feuille stratifiée, ainsi qu'un dispositif d'accouplement périphérique (91) superposé à l'épaulement de manière périphérique, disposé de l'autre côté de la couche fonctionnelle ou feuille stratifiée et fixé à la seconde unité de couplage (20B), de façon à ce que la couche fonctionnelle soit serrée de façon ferme et étanche à l'eau entre l'épaulement (90) et le dispositif d'accouplement (91).

29. Un article vestimentaire (10) selon l'une des revendications 24 à 28,
dans lequel la seconde unité de couplage (20B) comporte une plateforme (92) formant l'élément interne et une saillie (93) qui dépasse de la plateforme (92) à travers l'ouverture de logement (51A) et forme l'élément externe, la seconde bobine (35) étant noyée dans la saillie (93) et l'épaulement (90) étant formé à la transition entre la plateforme (92) et la saillie (93),
et dans lequel la première unité de couplage (20A) comprend une pièce en forme de capuchon (72) conçue pour recouvrir la saillie de la seconde unité de couplage (20B), la première bobine (30) étant noyée dans cette pièce en forme de capuchon (72) dans une position qui la dispose radialement près de la seconde bobine (35) lorsque ladite pièce en forme de capuchon (72) recouvre la saillie de la seconde unité de couplage.

30. Un article vestimentaire (10) selon la revendication 29, dans lequel la saillie (93) de la seconde unité de couplage (20B) et la pièce en forme de capuchon (72) de la première unité de couplage (20A) sont toutes deux de forme cylindrique.

31. Un article vestimentaire (10) suivant la revendication 29, dans lequel
la plateforme (92) de la seconde unité de couplage (20B) est cylindrique et de diamètre supérieur à celui de la saillie cylindrique (93),
l'épaulement (90) est formé à la transition entre le grand et le petit diamètre
et le dispositif d'accouplement (91) est en forme d'anneau.

32. Un article vestimentaire (10) selon la revendication 31, dans lequel le dispositif d'accouplement en forme d'anneau (91) est vissé dans la saillie cylindrique (93).
